Europäisches Patentamt

European Patent Office

Office européen des brevets

(11) Veröffentlichungsnummer: **0 623 407 A1**

## (12) EUROPÄISCHE PATENTANMELDUNG

(21) Anmeldenummer: **94106171.5**

(51) Int. Cl.5: **B21D 51/26**

(22) Anmeldetag: **21.04.94**

(30) Priorität: **03.05.93 DE 4314462**

(43) Veröffentlichungstag der Anmeldung:
**09.11.94 Patentblatt 94/45**

(84) Benannte Vertragsstaaten:
**CH DE ES GB IT LI NL**

(71) Anmelder: **KRUPP MASCHINENTECHNIK GESELLSCHAFT MIT BESCHRÄNKTER HAFTUNG**
**Helenenstrasse 149**
**D-45143 Essen (DE)**

(72) Erfinder: **Lentz, Norbert, Dr.-Ing.**
**Ostpreussenstrasse 82**
**D-45259 Essen (DE)**
Erfinder: **Keller, Matthias J.M., Dipl.-Ing.**
**Schässburger Strasse 7a**
**D-45701 Herten (DE)**
Erfinder: **Zielke, Günter**
**Pfarrer Disselhoff Strasse 17**
**D-46514 Schermbeck (DE)**

(54) **Vorrichtung zum Senkrechtstellen von Dosenzargen.**

(57) Die Vorrichtung zum Senkrechtstellen von Dosen (2) weist zwei parallel angeordnete Umlenkbänder (5, 15) auf. Der Vorrichtung ist eine Übergabevorrichtung (18) zum Übergeben jeder zweiten ankommenden Dose (2) auf das zweite Umlenkband (15) zugeordnet.

FIG. 2

EP 0 623 407 A1

Rank Xerox (UK) Business Services
(3. 10/3.09/3.3.4)

Die Erfindung betrifft eine ein Umlenkband und ein Aufstellband aufweisende Vorrichtung zum Senkrechtstellen von von einer Einrichtung liegend abgegebenen ferromagnetischen (im folgenden auch nur kurz als Dosen bezeichneten) Dosenzargen.

Beim Schweißen ihrer Längsnaht werden rundgebogene Dosenzargen "liegend" an der Schweißeinrichtung vorbeigeführt, d. h. ihre Achse ist waagerecht (horizontal) ausgerichtet (vgl. z. B. EP-A2-0 420 018). Entsprechend verläßt die geschweißte Dosenzarge die Trockenstrecke der Schweißmaschine liegend auf einer Transporteinrichtung.

Zum Zuführen in Bearbeitungseinheiten, wie z. B. einer Bördelmaschine, werden die Dosenzargen im allgemeinen stehend, d. h. mit senkrecht ausgerichteter Achse, zugeführt. Die Dosenzargen müssen demgemäß von dem liegenden in den stehenden Zustand überführt werden.

Es ist bekannt, Dosenzargen auf ein Übernahme- und Umlenkband laufen zu lassen, das mit einer gegenüber der Vorschubgeschwindigkeit der anliefernden Einrichtung größeren Umlaufgeschwindigkeit betrieben wird, und deshalb nach dem Stand der Technik als Beschleunigungsband bezeichnet wird. Auf dem Beschleunigungsband erhalten die Dosen aufgrund der größeren Geschwindigkeit auch einen größeren Abstand voneinander. Von dem Beschleunigungsband werden die Dosen auf ein weiteres Band, ein sog. Aufstellband abgegeben. Das Beschleunigungsband läuft mit seinem Obertrum über ein großes Umlenkrad. Die Transportrichtung und damit die Achse der Dosen wird dabei um 45 bis 90° nach unten umgelenkt.

Der Ab- bzw. Weitertransport der Dosen durch das Aufstellband erfolgt in bezug auf den abgebenden Teil des Beschleunigungsbandes im wesentlichen unter 90°, d. h. das Obertrum des Aufstellbandes ist im Übernahmebereich entsprechend waagerecht bzw. bis zu einem Winkel von 45° geneigt angeordnet. Soweit das Obertrum des Aufstellbandes geneigt ist, wird es bei Erreichen einer gewünschten Höhe um eine in die waagerechte Umlenkrolle gelenkt, damit die Dosen bei der Übergabe in die Bearbeitungseinheit senkrecht stehen.

Damit die Dosen von dem Beschleunigungsband auf das Aufstellband übergeben werden können, muß der Abstand der Dosen voneinander auf dem Beschleunigungsband und entsprechend die Umlaufgeschwindigkeit des Beschleunigungsbandes genügend groß sein. Bei Schweißgeschwindigkeiten von 1,7 m/s müßte die Umlaufgeschwindigkeit des Beschleunigungsbandes je nach Zargenhöhe bis zu 3,3 m/s betragen. Derart hohe Geschwindigkeiten führen aber - insbesondere bei großen Dosenhöhen - zu erheblichen Problemen: Durch die hohe Umlaufgeschwindigkeit kommt es bei bestimmten Dosengrößen aufgrund der Fliehkraft beim Umlenken - zumal die Dosenzargen mit ihrer Mantelfläche theoretisch nur in einem Punkt an dem Umlenkrad am Gurtband anliegen - zum Ablösen der Dosen vom Beschleunigungsband. Die hohe Aufschlaggeschwindigkeit kann daneben zur Beschädigung der Ränder der offenen Dosenzargen führen und verursacht zudem mit den scharfen Rändern der Dosenzargen einen entsprechend hohen Verschleiß des übernehmenden Aufstellbandes. Außerdem ist die Sicherheit beim Übernehmen der Dosen durch das Aufstellband, zumal bei einer Schrägstellung, durch Schwerkraftkomponenten und Beschleunigungskräfte gefährdet.

Der Erfindung liegt die Aufgabe zugrunde, hier Abhilfe zu schaffen und eine Vorrichtung zum Senkrechtstellen von Dosen der eingangs genannten Art so zu verbessern, daß eine sicherere Übernahme von Dosen auch bei hohen Zuführgeschwindigkeiten bzw. bei großer Ausbringung (Dosen/min) möglich ist.

Diese Aufgabe wird erfindungsgemäß dadurch gelöst, daß dem Umlenkband ein zweites, parallel laufendes Umlenkband zugeordnet und eine Übergabevorrichtung zum Übergeben von Dosen auf das zweite Beschleunigungsband vorgesehen ist.

Von den ankommenden Dosen kann jede zweite Dose von der Übergabevorrichtung auf das weitere Umlenkband gegeben werden. Dadurch vergrößert sich der Abstand zwischen jeweils zwei Dosen gegenüber der ankommenden Dosenreihe auf jeder der beiden Umlenkbänder um - bei gleicher Geschwindigkeit - eine Zargenhöhe und damit um einen erheblichen Betrag. Jedes der beiden Umlenkbänder kann also erheblich langsamer laufen als ein einzelnes. Entsprechend verringert sich die Auftreffgeschwindigkeit der Dosen auf das Aufstellband, so daß ein Abheben bzw. Abfallen der Dosen beim Umlenken und Beschädigungen an der Dose beim Auftreffen sowie ein Verschleiß am Aufstellband vermieden bzw. erheblich reduziert werden.

Verschleißmindernd wirkt sich auf das Aufstellband weiter aus, daß die Umlenkbänder die Dosen notwendigerweise in zwei Reihen auf das Aufstellband abgeben, so daß die auf die Flächeneinheit bezogene Belastung des Aufstellbandes zusätzlich gemindert wird.

Vorteilhafte Weiterbildungen der Erfindung sind in den Unteransprüchen beschrieben. Bei einer bevorzugten Ausführungsform ist die Übergabevorrichtung mit quer zu den Umlenkbändern ausgerichteten Luftdüsen versehen. In Abhängigkeit von der Taktfolge der ankommenden Dosenreihe werden die Düsen für jede zweite Dose geöffnet. Daneben kann die Übergabevorrichtung mit einem quer zu den Beschleunigungsbändern bewegbaren Stempel versehen sein, wodurch ein präziser Bewegungsablauf gewährleistet ist.

Um das Auslösen der Übergabevorrichtung präzise steuern zu können, ist ein die ankommenden Dosen erfassender Schalter vorgesehen.

Das zweite Umlenkband ist an seiner von der Übergabevorrichtung abgewandten Seite mit einer Begrenzung, z. B. einer Auffangwand oder -führung, ausgerüstet, damit die Dosen sicher auf dem Band gehalten werden können.

Während das Gurtband der Umlenkbänder im Bereich des Obergurts in bekannter Weise von Magneten unterlegt ist, die die Dosen an das Gurtband angezogen halten, ist im Bereich der Übergabevorrichtung die Magnetunterlegung des die Dosen abgebenden Bandes reduzierbar. Dies kann einerseits dadurch geschehen, daß die auf die Flächeneinheit bezogene Dichte der Magnetunterlegung verringert ist oder daß die Magnethaftung durch einen Elektromagneten gesteuert wird, der bei Auslösen der Übergabevorrichtung abgeschaltet, zumindest aber gedrosselt wird.

Zur geordneten Übergabe der Dosen von den Umlenkbändern auf das Aufstellband können Mittel zum Gleichlauf der beiden Umlenkbänder vorgesehen sein.

Bei einer anderen bevorzugten Ausführungsform verläuft eins der Umlenkbänder in Höhe der Übergabevorrichtung über eine Länge, die mindestens der größten Dosenhöhe entspricht, parallel zu der die Dosen antransportierenden Einheit. Da hier keins der Umlenkbänder - auch nicht partiell - den gesamten ankommenden Dosenstrom aufnehmen muß, ergibt sich bereits durch das reine Aufteilen des ankommenden Dosenstroms eine erhebliche Vergrößerung des Abstandes zwischen den einzelnen Dosen auf dem jeweiligen Umlenkband. Dies ermöglicht, daß die Umlenkbänder sogar langsamer laufen können als die die Dosen antransportierende Einrichtung.

Um den durch das Umlenken eingeleiteten Höhenverlust wieder auszugleichen, weist der aufnehmende Teil des Aufstellbandes gegenüber einer Horizontalen und die Abgaberichtung der Umlenkbänder und/oder ggf. einer verlängernden Führung gegenüber der Lotrechten einen Winkel von 5 bis 45°, vorzugsweise 8 bis 18° auf.

Um eine sichere Übergabe der Dosen auf das Aufstellband zu gewährleisten, ist vorgesehen, den Winkel zwischen der Abgaberichtung der Umlenkbänder und/oder ggf. einer verlängernden Führung und dem in Transportrichtung liegenden, sich anschließenden Teil des Aufstellbandes zwischen 80 und 89, vorzugsweise 85 bis 88° festzusetzen. Die Dosen treffen dabei zunächst mit ihrer - in Transportrichtung des Aufstellbandes gesehen - vorderen Kante des Randes auf. Von der Seite gesehen ist zwischen dem Rand der Dose und dem Aufstellband ein nach hinten offener Winkel von 1 bis 10 bzw. 2 bis 5°. Wenn die Dose durch das Aufstellband erfaßt wird, kann sie um diesen Winkel nach hinten schwenken und sich so satt auf das Aufstellband stellen. Ein weiteres Kippen wird durch hinten geschlossene Führungen verhindert.

Um die Gesamtlänge der Transportanlage zu begrenzen, ist das Aufstellband - in der Draufsicht gesehen - vorzugsweise rechtwinklig zu den Umlaufbändern angeordnet. Um einen reibungslosen Abtransport der Dosen auf dem Abstellband zu gewährleisten, sind die Abgabeenden der Umlenkbänder und/oder der von diesen wegführenden Führungen quer zur Hauptrichtung des Aufstellbandes versetzt angeordnet, wobei der Versatz mindestens dem größten Dosendurchmesser entspricht. Um einen problemlosen Übergang auf das zweite Umlenkband zu gewährleisten, ist weiterhin vorgesehen, im Bereich der Übergabevorrichtung ein Übergabeblech vorzusehen, das unter dem Obertrum des zweiten Umlenkbandes und des den gesamten Dosenstrom zumindest über eine Teillänge transportierenden Bandes anzuordnen.

Ausführungsbeispiele der Erfindung sind in der Zeichnung dargestellt und werden im folgenden näher erläutert. Es zeigen

Fig. 1    eine erfindungsgemäße Vorrichtung in der Seitenansicht,

Fig. 2    die Vorrichtung in der Draufsicht,

Fig. 3    eine abgewandelte Ausführungsform einer Vorrichtung zum Senkrechtstellen von Dosen in einer vereinfachten Draufsicht,

Fig. 4    die Vorrichtung in einer auszugsweisen vereinfachten Seitenansicht gemäß Blickrichtung IV in Fig. 5,

Fig. 5    die Vorrichtung in einer rückwärtigen Stirnansicht gemäß Blickrichtung V in Fig. 3 und

Fig. 6    die Vorrichtung in einem Querschnitt längs der Linie VI - VI in Fig. 3.

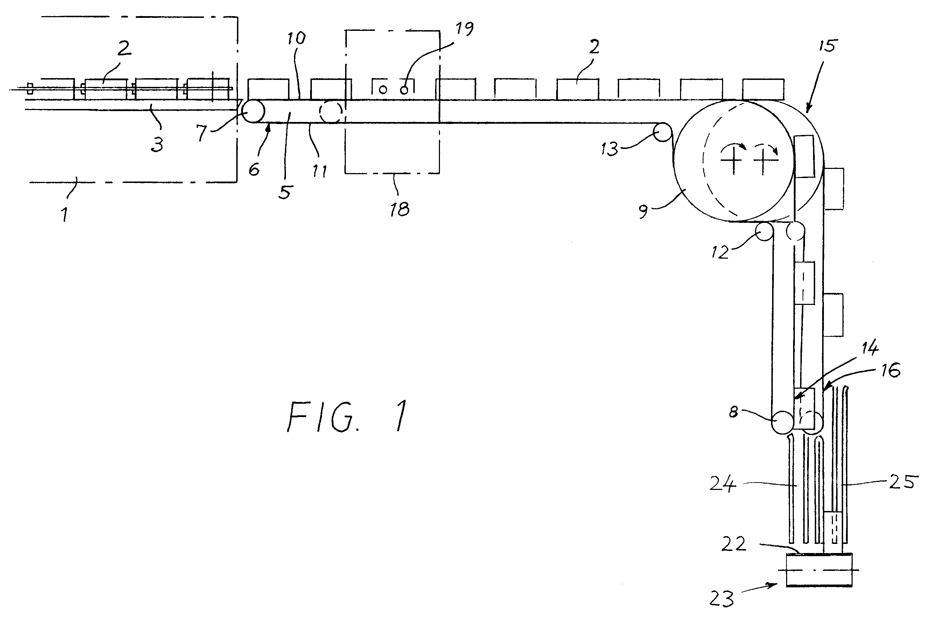

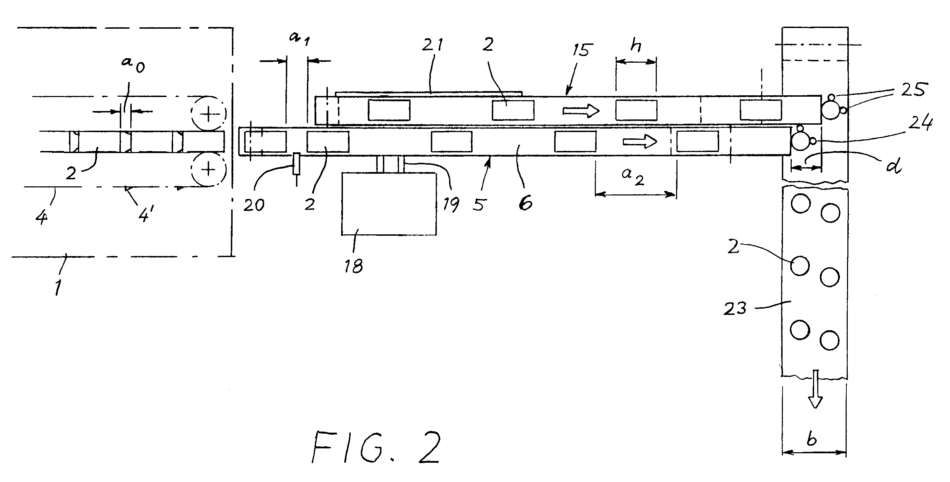

Bei einer Anlage gemäß den Figuren 1 und 2 werden aus einer Fertigungsmaschine, insbesondere einer Schweißmaschine 1, ferromagnetische Dosenzargen 2 (im folgenden nur kurz als Dosen bezeichnet) liegend und mit geringem Abstand a0 voneinander abgegeben. Die Führung 3 der Dosen 2 innerhalb der Schweißmaschine 1 ist lediglich symbolisch angedeutet. Ausführlich ist eine solche Führung z. B. in der DE-OS 38 10 611 beschrieben. Innerhalb der Schweißmaschine 1 erfolgt der Vorschub der Dosen 2 z. B. durch seitliche Ketten 4 mit Mitnehmern 4'.

Unmittelbar an die Führung 3 setzt ein erstes Beschleunigungsband 5 an, das ein Gurtband 6 aufweist, das um zwei Umlenkrollen 7, 8 an den jeweiligen Enden und - irgendwo dazwischen - durch ein Umlenkrad 9 mit großem Radius in seiner Richtung um 90° nach unten abgelenkt wird. Das bei der Übernahme der Dosen 2 von der Schweißmaschine 1 übernehmende waagerecht ausgerichtete Obertrum 10 des Gurtbandes 6 ist also an seinem durch die Umlenkrolle 8 bestimmten Abgabeende 14 lotrecht ausgerichtet. Das Obertrum 10 gleitet in bekannter Weise auf (nicht gesondert dargestellten) Dauermagneten, die die Dosen 2 an das Gurtband 6 gezogen halten. Das Untertrum 11 ist vor und hinter dem Umlenkrad 9 über weitere Umlenkrollen 12, 13 geführt, von denen eine als Spannrolle ausgebildet sein kann.

Parallel zu dem Beschleunigungsband 5 ist ein zweites Beschleunigungsband 15 angeordnet. Der waagerechte Bereich des Beschleunigungsbandes 15 ist kürzer ausgebildet als der des Beschleunigungsbandes 5, ansonsten sind beide Beschleunigungsbänder baugleich ausgebildet. Insbesondere sind die Umlenkrollen 8 beider Beschleunigungsbänder in gleicher Höhe angeordnet, d. h. die Bänderenden mit ihrem Obertrum 10 weisen die gleiche Höhe auf.

Das zweite Beschleunigungsband 15 ist mit seinem nach unten gerichteten Ab- bzw. Übergabeteil 16 - in Bewegungsrichtung des waagerecht verlaufenden Teils des Obertrum gesehen - gegenüber dem Abgabeende 14 des ersten Beschleunigungsbandes 5 um das Maß d versetzt. Dabei entspricht das Maß d im wesentlichen dem Durchmesser der größten Dose, für die die Vorrichtung ausgelegt ist.

Im Bereich des waagerechten Teils des zweiten Beschleunigungsbandes 15 ist an der diesem Band gegenüberliegenden Seite des Beschleunigungsbandes 5 eine Vorrichtung 18 vorhanden, die jede zweite der ankommenden Dosen 2 auf das zweite Beschleunigungsband 15 überführt. Im einfachsten Fall ist die Vorrichtung 18 mit quer zu den Beschleunigungsbändern 5, 15 ausgerichteten Luftdüsen 19 versehen. Damit die Düsen die Luft zum richtigen Zeitpunkt abgeben, ist ein die ankommenden Dosen erfassender Näherungsschalter 20 vorgesehen. Zum Auslösen der Luftströmung werden die Signale des Schalters 20 entsprechend halbiert.

Damit sich die Dosen 2 vom ersten Beschleunigungsband 5 lösen, ist die eingangs beschriebene Unterlegung des Obertrums mit Magneten an der Übergabestelle reduziert. Damit die Dosen bei der Übergabe nicht über das zweite Beschleunigungsband hinausfallen, ist dieses an seiner von dem ersten Beschleunigungsband 5 abgewandten Seite mit einer Führung oder Auffangwand 21 versehen. Um ein federndes Zurückspringen der Dosen 2 zu vermeiden, kann die Führung 21 im Übergabebereich mit Magneten hinterlegt sein.

Die Umlaufgeschwindigkeit der Beschleunigungsbänder 5, 15 ist größer als die Vorschubgeschwindigkeit der Kette 4. Dadurch vergrößert sich der Abstand zwischen den Dosen auf dem Aufstellband 5 auf das Maß a1. Durch das Übergeben jeder zweiten Dose an das zweite Beschleunigungsband 15 vergrößert sich der ursprünglich zwischen den Dosen vorhandene kurze Abstand a0 auf jedem Beschleunigungsband auf insgesamt a2 = a1 + h, wobei h die Höhe der Dosenzargen bedeutet.

Mit Abstand unter den Enden 14 bzw. 16 der Beschleunigungsbänder 5 bzw. 15 ist das Obertrum 22 eines sog. Aufstellbandes 23 angeordnet. Dies ist - in der Draufsicht gesehen - rechtwinklig zu den Beschleunigungsbändern 5, 15 ausgerichtet und hat eine Breite b von etwa 2d.

Der Abstand von den Enden der Beschleunigungsbänder 5, 15 bis zum Aufstellband 23 wird durch sog. Führungskörbe 24, 25 überbrückt, in denen die Dosen dem freien Fall überlassen sind. In Transportrichtung des abfördernden Aufstellbandes 23 sind die Körbe 24, 25 über eine Höhe, die mindestens der größten Höhe der aufzustellenden Dosen entspricht, offen.

Die Beschleunigungsbänder 5, 15 geben durch die Körbe 24, 25 jeweils abwechselnd eine Dose 2 stehend auf das Aufstellband 23, wobei - wie bei den Beschleunigungsbändern - unter dem Obertrum 22 des Aufstellbandes 23 Magnete angeordnet sind, die die Dosen 2 - hier auf ihren kreisrunden Rändern stehend - auf dem Aufstellband 23 halten.

Durch den Versatz der Beschleunigungsbänder um das Maß d werden die Dosen in zwei Reihen auf das Aufstellband 23 übergeben und transportiert, wobei beide Reihen bei Bedarf in beliebiger Weise - in einfachster Weise durch seitliche Führungen - zu einer Reihe zusammengefaßt werden können.

Es sei angenommen, daß die Dosen 2 die Schweißmaschine 1 mit einer Geschwindigkeit v1 = 1,67 m/s verlassen. Die Beschleunigungsbänder 5 und 15 werden beispielsweise mit einer Umlaufgeschwindigkeit von v2 = 1,87...2,33 m/s betrieben. Dadurch, daß jede zweite Dose auf das zweite Beschleunigungsband 15 übergeben wird, ändert sich der Abstand der Dosen auf jedem der Beschleunigungsbänder 5 bzw. 15 automatisch um mindestens eine Dosenhöhe. Insofern könnten die beiden Beschleunigungsbänder 5, 15 auch nur mit der Vorschubgeschwindigkeit v1 der Schweißmaschine 1 betrieben werden.

Die Antriebe der Beschleunigungsbänder 5 und 15, z. B. an den Umlenkrollen 8, können durch geeignete Mittel zu einem winkelgetreuen Drehen gebracht werden, wodurch die Umlaufgeschwindigkeiten beider Beschleunigungsbänder gleich groß sind. Dazu geeignete Mittel sind beispielsweise in dem BBC-Handbuch für Elektromotoren, Essen: Giradet 1968, Seiten 344-350 beschrieben.

Die Geschwindigkeit des Aufstellbandes 23 richtet sich nach dem Durchsatz (Dosen/min) und dem erforderlichen Abstand der stehenden Dosen beim Eintritt in die nächste Arbeitsstation bzw. die nächste Einheit.

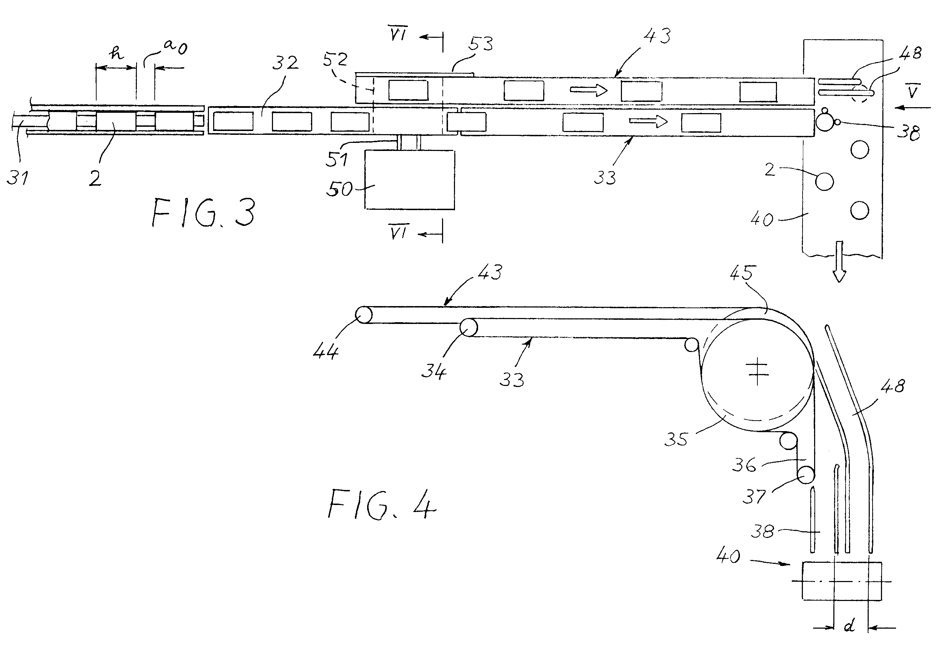

Bei dem Ausführungsbeispiel gemäß den Fig. 3 bis 6 werden die Dosenzargen 2 auf einem Band 31 z. B. aus der Trockenstrecke eines Schweißbodymakers mit der Geschwindigkeit v1 antransportiert und auf ein Zwischenband 32 übergeben. Das Zwischenband 32 läuft mit der gleichen Geschwindigkeit v1. Der Funktion nach können die Bänder 31 und 32 zusammen auch als ein Stück ausgebildet sein. Die Dosen mit der Höhe h weisen auf den Bändern 31, 32 einen Abstand von $a_0$ voneinander auf.

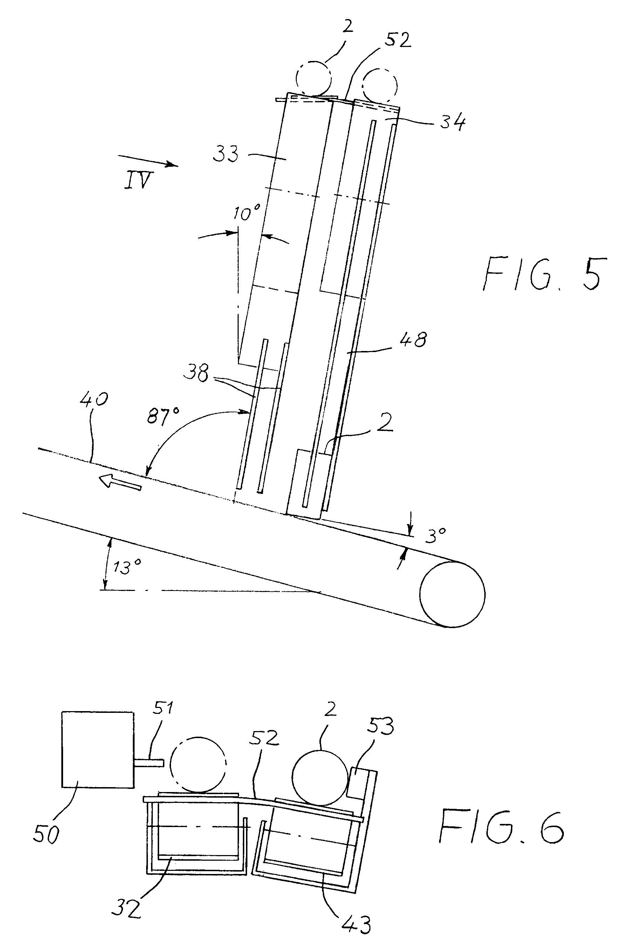

Unmittelbar an das Zwischenband 32 schließt sich ein erstes Umlenkband 33 an. Das Umlenkband 33 ist im wesentlichen wie das Beschleunigungsband 5 ausgebildet, es ist jedoch - wie aus Fig. 5 ersichtlich - in Querrichtung um 10° geneigt. Das Umlenkband 33 weist einen anfänglich waagerechten Verlauf auf, der durch die Umlenkrolle 34 und das Umlenkrad 35 bestimmt ist, und ein - von der Seite gesehen - senkrecht nach unten ausgerichtetes Abgabeende 36, das durch das Umlenkrad 35 und die Umlenkrolle 37 bestimmt ist. An das Abgabeende 36 schließt sich in gleicher Richtung ein Führungskorb 38 an, der bis zu einem Aufstellband 40 reicht und in Transportrichtung des Aufstellbandes 40 über eine erforderliche Höhe offen ist (der in Fig. 4 dargestellte mittlere Stab des Führungskorbes 38 liegt entgegen der Transportrichtung hinter der Zeichenebene).

In einem geringen Abstand zu dem Umlenkband 33 ist ein zweites Umlenkband 43 angeordnet, das mit seinem waagerecht verlaufenden Anfangsteil - in Transportrichtung gesehen - bereits vor dem ersten Umlenkband 33, und zwar mindestens um im wesentlichen die größte zu verarbeitende Dosenhöhe, beginnt und entsprechend neben dem Zwischenband 32 verläuft.

Das Umlenkband 43 weist lediglich einen waagerechten Verlauf auf, der in bezug auf das Obertrum durch die Umlenkrolle 44 und das Umlenkrad 45 bestimmt ist. Es weist keinen nach unten weisenden Verlauf auf, sondern wird vollständig von dem Umlenkrad 45 umgelenkt. Die Abnahme der Dosen 2 von dem Umlenkband 43 erfolgt durch einen Führungskorb 48 unmittelbar an dem Umlenkrad 45 nach etwa 60...85° Umlenkung aus der Horizontalen. Der Führungskorb 48 ist denn auch anfänglich um 5...30° gegen die Lotrechte geneigt und geht in einen - von der Seite gesehen - senkrechten Verlauf bis zum Aufstellband 40 über.

Durch die - in der Seitenansicht (Fig. 4) gesehen - Schrägführung des Führungskorbes 48 ergibt sich beim Absetzen der Dosen auf dem Aufstellband wie beim ersten Ausführungsbeispiel trotz der in gleicher Entfernung angeordneten Achsen der Umlenkräder 35, 45 in der ursprünglichen Transportrichtung und damit quer zur Transportrichtung des Aufstellbandes 40 ein mindestens dem größten Durchmesser entsprechender Abstand oder der Versatz d.

Von der rückwärtigen Stirnansicht gesehen, ist der Führungskorb 48 - wie der Führungskorb 38 und beide Umlenkbänder 33, 43 - um 10° geneigt (in Fig. 3 ist diese Neigung zur Vereinfachung nicht mitberücksichtigt). Das Aufstellband 40 weist eine Steigung von 13° gegenüber der Horizontalen auf, um den durch die von den Umlenkbändern 33, 43 und die Führungskörbe 38, 48 bewirkten Höhenverlust wieder auszugleichen.

Der Steigungswinkel des Aufstellbandes 40 ist also um 3° größer als die Querneigung der Umlenkbänder 33, 43. Dies hat folgende Bewandnis: Der jeweilige Dosenrumpf 2 trifft mit seiner - in Transportrichtung des Aufstellbandes 40 gesehen - vorderen Kante auf das Band 40 auf und wird in Folge Reibung sofort von dem Band erfaßt und mit dessen Vorschubgeschwindigkeit abtransportiert. Durch die dabei entstehende sehr große Beschleunigungskraft kippt die Dose 2 mit ihrem oberen Teil nach hinten und gelangt entsprechend mit dem hinteren Teil des unteren Randes vollständig auf das Band 40, wodurch eine sichere Mitnahme gewährleistet ist. Ein unbeabsichtigtes weiteres Kippen der Dose nach hinten wird durch die hinteren Stäbe der Führungskörper 38 bzw. 48 verhindert.

Wie bereits erläutert, verläuft das zweite Übergabeband 43 über mindestens die größte Dosenhöhe neben dem Zwischenband 32. In dem Bereich dieser gemeinsamen Länge ist eine Vorrichtung 50 zum Überführen von Dosenzargen von dem Zwischenband 32 auf das Umlenkband 43 vorgesehen. Diese Vorrichtung ist - wie die Vorrichtung 18 - mit Luftdüsen 51 versehen und die Steuerung der Vorrichtung kann analog der der Vorrichtung 18 erfolgen. Damit die Dosen 2 problemlos auf den - von der Seite gesehen - waagerechten Teil des Umlenkbandes 43 gelangen können, ist ein Übergangsblech 52 (Fig. 6) vorgesehen, das jeweils unter dem Obertrum der betreffenden Bänder 32 bzw. 43 angeordnet ist. Das Umlenkband 43 weist wiederum eine Auffangwand oder -führung 53 für die Dosen auf.

Da bei diesem Ausführungsbeispiel keins der Umlenkbänder 33 bzw. 43 - auch nicht partiell - alle ankommenden Dosen aufnehmen muß, können diese Umlenkbänder gegenüber dem Zwischenband 32 bzw. dem Band 31 mit größerer, gleicher, aber - in Abhängigkeit von den konkreten Erfordernissen - grundsätzlich auch mit geringerer Geschwindigkeit betrieben werden, denn durch die Aufteilung der Dosen von vornherein auf zwei Umlenkbänder ist in jedem Falle eine Vergrößerung des Abstandes zwischen den transportierten Dosen gewährleistet.

**Patentansprüche**

1. Vorrichtung zum Senkrechtstellen von von einer Einrichtung (1, 2, 3; 31, 32) liegend abgegebenen ferromagnetischen Dosen (2), bestehend aus einem Umlenkband (5; 33) und einem Aufstellband (23; 40),
   **dadurch gekennzeichnet,**
   daß dem Umlenkband (5; 33) ein zweites Umlenkband (15; 43) zugeordnet und eine Übergabevorrichtung (18; 50) zum Übergeben von Dosen (2) auf das zweite Umlenkband (15; 43) vorgesehen ist.

2. Vorrichtung nach Anspruch 1, dadurch gekennzeichnet, daß die Vorrichtung (18; 50) zum Überführen der Dosen (2) auf das zweite Umlenkband (15; 43) quer zu den Umlenkbändern (5, 15; 33, 43) gerichteten Luftdüsen (19; 51) aufweist.

3. Vorrichtung nach Anspruch 1, dadurch gekennzeichnet, daß die Vorrichtung (18; 50) zum Überführen der Dosen (2) auf das zweite Umlenkband (15; 43) mit einem quer zu den Umlenkbändern (5, 15; 33, 43) bewegbaren Stempel versehen ist.

4. Vorrichtung nach einem der Ansprüche 1 bis 3, dadurch gekennzeichnet, daß die Vorrichtung (18; 50) zum Überführen der Dosen (2) auf das zweite Umlenkband 15; 43) durch einen Schalter (20) steuerbar ist, der geeignet ist, die antransportierten Dosen (2) zu erfassen.

5. Vorrichtung nach einem der vorangegangenen Ansprüche, dadurch gekennzeichnet, daß das zweite Umlenkband (15; 43) an seiner von der Übergabevorrichtung (18; 50) abgewandten Seite eine Begrenzung (21; 53) für die Dosen (2) aufweist.

6. Vorrichtung nach einem der vorangegangenen Ansprüche mit Magnetunterlegung der die Dosen transportierenden Trume der Bänder (5, 15; 32; 33, 43), dadurch gekennzeichnet, daß im Bereich der Übergabevorrichtung 18; 50) die Magnetunterlegung des die Dosen (2) abgebenden Bandes (5; 32) reduzierbar ist.

7. Vorrichtung nach einem der vorangegangenen Ansprüche, dadurch gekennzeichnet, daß Mittel zum Gleichlauf der Antriebe der Beschleunigungsbänder (5, 15; 33, 43) vorgesehen sind.

8. Vorrichtung nach einem der vorangegangenen Ansprüche, dadurch gekennzeichnet, daß eins der Umlenkbänder (43) in Höhe der Übergabevorrichtung (50) über eine Länge, die mindestens der größten Dosenhöhe (h) entspricht, parallel zu der die Dosen (2) antransportierenden Einheit (32) verläuft.

9. Vorrichtung nach einem der vorangegangenen Ansprüche, dadurch gekennzeichnet, daß die Abgaberichtung der Umlenkbänder (33, 43) und/oder ggf. einer verlängernden Führung (38, 48) gegen die Lotrechte und der aufnehmende Teil des Aufstellbandes (40) gegenüber einer Horizontalen einen Winkel von 5 bis 45°, vorzugsweise 8 bis 18° aufweist.

10. Vorrichtung nach einem der vorangegangenen Ansprüche, dadurch gekennzeichnet, daß der Winkel zwischen der Abgaberichtung der Umlenkbänder (33, 43) und/oder ggf. einer verlängernden Führung (38, 48) und dem in Transportrichtung liegenden, sich anschließenden Teil des Aufstellbandes (40) 80 bis 89°, vorzugsweise 85 bis 88° beträgt.

11. Vorrichtung nach einem der vorangegangenen Ansprüche, dadurch gekennzeichnet, daß das Aufstellband (23, 40) - in Draufsicht gesehen - rechtwinklig zu den Umlenkbändern (5, 15; 33, 43) angeordnet ist und daß die Abgabeenden der Umlenkbänder (5, 15; 33, 43) und/oder ggf. einer verlängernden Führung (23, 24; 38, 48) quer zur Hauptrichtung des Aufstellbandes einen Versatz (d) aufweisen.

12. Vorrichtung nach einem der vorangegangenen Ansprüche, dadurch gekennzeichnet, daß im Bereich der Übergabevorrichtung (18; 50) zwischen dem zweiten Umlenkband (15; 43) und dem den gesamten Dosenstrom zumindest über eine Teillänge transportierenden Bandes (5; 32) ein Übergabeblech (52) vorgesehen ist, das unter dem Obertrum der beiden Bänder (5; 32) angeordnet ist.

FIG. 1

EP 0 623 407 A1

FIG. 2

EP 0 623 407 A1

FIG. 3

FIG. 4

EP 0 623 407 A1

EP 0 623 407 A1

FIG. 5

FIG. 6

10

Europäisches Patentamt

**EUROPÄISCHER RECHERCHENBERICHT**

Nummer der Anmeldung

EP 94 10 6171

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,A | EP-A-0 420 018 (KRUPP)<br>* Anspruch 1; Abbildung 1 *<br>--- | 1 | B21D51/26 |
| Y | DE-A-28 52 741 (HAYSSEN)<br>* Ansprüche 1,2; Abbildung 1 *<br>--- | 1,2,8 | |
| Y | EP-A-0 121 106 (HEUFT)<br>* Seite 10, Zeile 9 - Zeile 11; Ansprüche 1,2; Abbildungen 1,3 *<br>--- | 1,2,8 | |
| A | US-A-3 433 343 (GIULIE)<br>* Spalte 2, Zeile 12 - Zeile 17; Anspruch 1; Abbildung 1 *<br>--- | 1,3 | |
| A | DE-A-34 27 379 (BREITNER-ABFÜLLANLAGEN)<br>* Ansprüche 1-4; Abbildung 1 *<br>--- | 1,8 | |
| A | EP-A-0 462 497 (FMC CORPORATION)<br>* Anspruch 1; Abbildung 1 *<br>--- | 1 | |
| A | US-A-1 881 187 (HERMANI)<br>* Anspruch 1; Abbildung 1 *<br>----- | 1 | **RECHERCHIERTE SACHGEBIETE (Int.Cl.5)**<br><br>B21D<br>B65G<br>B23K |

Der vorliegende Recherchenbericht wurde für alle Patentansprüche erstellt

| Recherchenort | Abschlußdatum der Recherche | Prüfer |
|---|---|---|
| BERLIN | 6. Juli 1994 | Schlaitz, J |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes
  Dokument

EPO FORM 1503 03.82 (P04C03)